Europäisches Patentamt

European Patent Office

Office européen des brevets

(11) Numéro de publication: **0 229 736**
**A1**

## (12) DEMANDE DE BREVET EUROPEEN

(21) Numéro de dépôt: 87400003.7

(22) Date de dépôt: 02.01.87

(51) Int. Cl.⁴: **B 65 B 11/04**

(30) Priorité: 03.01.86 FR 8600045

(43) Date de publication de la demande:
22.07.87 Bulletin 87/30

(84) Etats contractants désignés:
AT BE CH DE ES GB GR IT LI LU NL SE

(71) Demandeur: COMPAGNIE GENERALE DES PAPIERS
100, Rue Petit
F-75019 Paris (FR)

(72) Inventeur: Guillo, Jean-Claude
54, rue Deménitroux
F-76260 EU (FR)

Leroux, Jacques
38, rue Alexis Carrel
F-76260 EU (FR)

Robert-Charrerau, Guy
Le Bocage Fleuri Rue des Canadiens
F-76260 EU (FR)

(74) Mandataire: Nony, Michel
Cabinet DUPUY & LOYER 14, rue La Fayette
F-75009 Paris (FR)

(54) Dispositif pour recouvrir un corps cylindrique d'une bande d'un matériau de protection.

(57) L'invention est relative à un dispositif pour recouvrir un corps cylindrique (20), notamment une bobine de papier, d'une bande (10) d'un matériau de protection tel qu'un film étirable, à partir d'un organe d'alimentation (8), ce dispositif comprenant un plateau tournant (4) supportant des rouleaux (11, 12) servant d'appui pour le corps cylindrique.

Lesdits rouleaux d'appui sont tourillonnés dans des poulies (13, 14) solidaires dudit plateau, et des moyens mécaniques (16, 17) sont prévus pour provoquer, lors de chaque rotation du plateau tournant, une rotation d'au moins un des rouleaux d'appui (12) selon un angle déterminé.

Bundesdruckerei Berlin

## Description

Dispositif pour recouvrir un corps cylindrique d'une bande d'un matériau de protection.

La présente invention concerne un dispositif pour recouvrir un corps cylindrique, notamment une bobine de papier, d'une bande d'un matériau de protection tel qu'un film étirable, à partir d'un organe d'alimentation.

On connaît déja de tels dispositifs comprenant un plateau tournant supportant des rouleaux servant d'appui pour la bobine. Celle-ci est donc supportée avec son axe horizontal, tandis que le plateau tourne autour d'un axe vertical contenu sensiblement dans le même plan que l'axe de la bobine.

Cette rotation du plateau provoque par conséquent l'enroulement du film étirable autour de la bobine le long des génératrices de cette dernière.

Il est donc nécessaire, pour emballer totalement la bobine, de la faire tourner simultanément autour de son axe, soit de façon continue, soit pas à pas.

On a déjà proposé à cet effet de motoriser l'un des rouleaux d'appui qui, en tournant, entraîne la rotation de la bobine par friction.

L'entraînement du rouleau d'appui ne peut toutefois être effectué simplement, étant donné d'une part que le plateau qui supporte le rouleau est lui-même entraîné en rotation, et étant donné d'autre part le poids de la bobine.

La présente invention vise à pallier cet inconvénient.

A cet effet, l'invention a pour objet un dispositif pour recouvrir un corps cylindrique, notamment une bobine de papier, d'une bande d'un matériau de protection tel qu'un film étirable, à partir d'un organe d'alimentation, ce dispositif comprenant un plateau tournant supportant des rouleaux servant d'appui pour le corps cylindrique, caractérisé par le fait que lesdits rouleaux d'appui sont tourillonnés dans des paliers solidaires dudit plateau, et que des moyens mécaniques sont prévus pour provoquer, lors de chaque rotation du plateau tournant, une rotation d'au moins un des rouleaux d'appui selon un angle déterminé.

Les rouleaux d'appui ne sont donc pas motorisés, ce qui introduit une simplification considérable par rapport aux dispositifs de l'état de la technique.

Par contre, à chaque tour du plateau tournant, un dispositif mécanique, qui peut être réalisé très simplement, provoque la rotation voulue des rouleaux qui entraînent eux-mêmes la bobine par effet de frottement.

Dans un mode de réalisation particulier de l'invention, lesdits moyens mécaniques comprennent un suiveur de came monté sur le plateau et agencé pour provoquer la rotation dudit rouleau d'appui par coopération avec une came disposée sur son trajet de déplacement lors de la rotation du plateau.

Lesdits rouleaux d'appui peuvent notamment être montés fous, le suiveur de came étant constitué par une poulie montée à l'extrémité de l'axe d'un des rouleaux d'appui et agencée pour rouler sur une piste de ladite came à chaque rotation du plateau.

De préférence, la came est montée amovible de manière à pouvoir choisir la longueur de la piste, et ainsi le taux de recouvrement de la bande, en fonction de la taille du corps cylindrique à emballer.

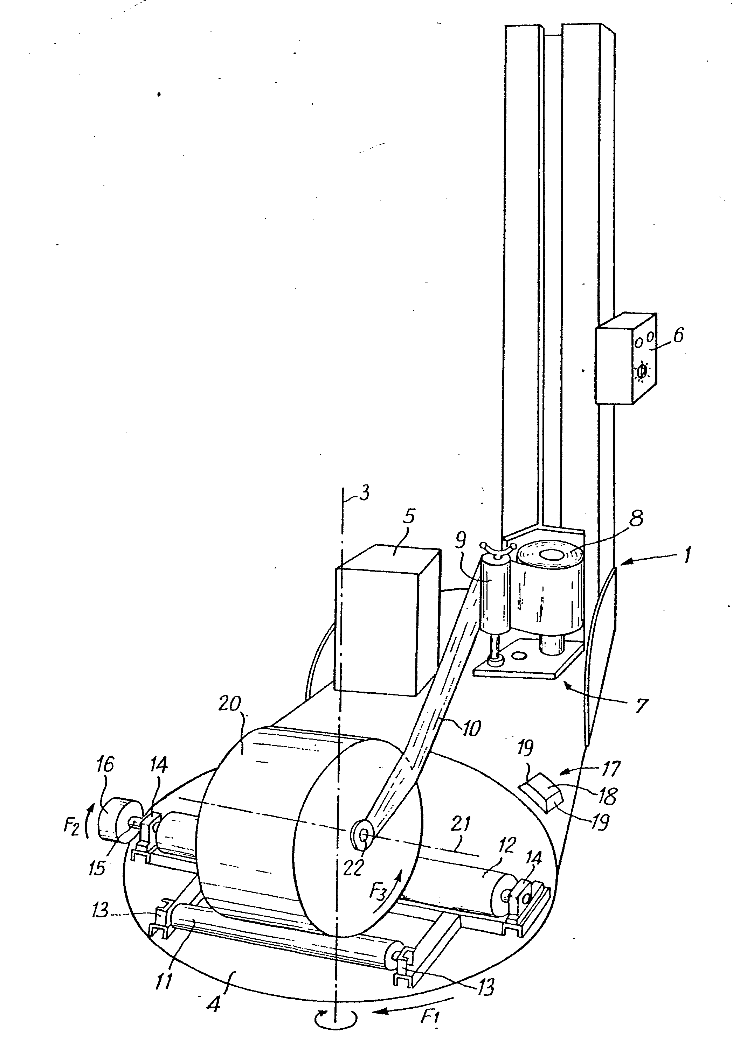

On décrira maintenant à titre d'exemple non limitatif un mode de réalisation particulier de l'invention en référence au dessin schématique annexé représentant en perspective un dispositif selon l'invention destiné à recevoir une bobine de papier d'un film étirable.

Ce dispositif comprend un bâti 1 supportant l'axe 3 d'un plateau horizontal 4 tournant, un moteur 5 pour l'entraînement du plateau 4 autour de son axe vertical dans le sens de la flèche F1, des moyens de commande 6 pour le moteur 5, et des moyens d'alimentation 7 en film étirable.

Les moyens d'alimentation 7 comprennent essentiellement un rouleau d'alimentation 8 et un rouleau de renvoi 9 destinés à régler la tension du film 10.

Le plateau 4 porte par ailleurs deux rouleaux parallèles à axe horizontal 11 et 12 montés fous sur des paliers 13 et 14 respectivement solidaires du plateau.

L'axe 15 du rouleau 12 porte en outre à une de ses extrémités un galet ou poulie 16 qui déborde du plateau 4.

Une came 17 est montée sur le bâti 1 sur le trajet décrit par la poulie 16 dans la rotation qu'elle effectue autour de l'axe 3, entraînée par le plateau 4.

La came 17 comporte une piste de roulement 18 pour la poulie 16 et deux plans inclinés 19 permettant d'éviter les chocs lorsque cette poulie aborde la came 17.

La bobine 20, à recouvrir du film étirable 10, est posée sur les rouleaux 11 et 12 de sorte que son axe 21 est horizontal et par conséquent sensiblement perpendiculaire à l'axe 3 du plateau 4.

Les rouleaux 11 et 12 sont montés sur le plateau 4 en des emplacements tels que les axes 3 et 21 sont à peu près concourants de manière à permettre un enroulement régulier du film 10 sur la bobine 20.

La bobine 20 étant disposée sur les rouleaux 11 et 12, l'extrémité du film 10 est fixée par tous moyens convenables au moyeu 22 de la bobine. Le plateau 4 est ensuite entraîné dans le sens de la flèche F1 à l'aide du moteur 5 de manière à commencer l'enroulement du film 10 sur la bobine 20.

Tant que la poulie 16 se trouve en dehors du trajet de la came 17, le rouleau 12 reste fixe par rapport à son axe, et la bobine 20 de même. Lorsque par contre la poulie 16 aborde la piste 18 de la came 17, elle entraîne par frottement la rotation du rouleau 12 dans le sens de la flèche F2. Le rouleau 12 entraîne à son tour la bobine 20 dans le sens de la flèche F3.

La longueur de la piste 18 et les diamètres de la poulie 16 et du rouleau 12 sont choisis de sorte qu'à chaque passage sur la came 17 la poulie 16 entraîne une rotation de la bobine 20 provoquant un chevauchement convenable des spires successives du film 10 autour de la bobine.

La came 17 peut d'ailleurs être montée de façon amovible, de manière à pouvoir sélectionner la longueur de la piste 18 en fonction du taux de recouvrement désiré pour le film, et de la taille de la bobine à emballer.

Diverses variantes et modifications peuvent bien entendu être apportées à la description qui précède sans sortir pour autant du cadre ni de l'esprit de l'invention.

**Revendications**

1. Dispositif pour recouvrir un corps cylindrique (20), notamment une bobine de papier, d'une bande (10) d'un matériau de protection tel qu'un film étirable, à partir d'un organe d'alimentation (8), ce dispositif comprenant un plateau tournant (4) supportant des rouleaux (11,12) servant d'appui pour le corps cylindrique, caractérisé par le fait que lesdits rouleaux d'appui sont tourillonnés dans des poulies (13,14) solidaires dudit plateau, et que des moyens mécaniques (16,17) sont prévus pour provoquer, lors de chaque rotation du plateau tournant, une rotation d'au moins un des rouleaux d'appui (12) selon un angle déterminé.

2. Dispositif selon la revendication 1, caractérisé par le fait que lesdits moyens mécaniques comprennent un suiveur de came (16) monté sur le plateau et agencé pour provoquer la rotation dudit rouleau d'appui par coopération avec une came (17) disposée sur son trajet de déplacement lors de la rotation du plateau.

3. Dispositif selon la revendication 2, caractérisé par le fait que lesdits rouleaux d'appui sont montés fous, et que ledit suiveur de came est constitué par une poulie montée à l'extrémité de l'axe d'un des rouleaux d'appui (12), et agencée pour rouler sur une piste (18) de ladite came à chaque rotation du plateau.

4. Dispositif selon l'une quelconque des revendications 2 et 3, caractérisé par le fait que ladite came est montée amovible.

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-2 056 401 (JONES) <br> * Page 1, ligne 100 - page 2, ligne 8; figure 1 * | 1 | B 65 B  11/04 |

DOMAINES TECHNIQUES
RECHERCHES (Int. Cl.4)

B 65 B
A 01 F

Le présent rapport de recherche a été établi pour toutes les revendications

| Lieu de la recherche | Date d'achèvement de la recherche | Examinateur |
|---|---|---|
| LA HAYE | 06-04-1987 | CLAEYS H.C.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82